# EUROPÄISCHE PATENTSCHRIFT

(11) **EP 3 230 546 B1**
(45) Veröffentlichungstag und Bekanntmachung des Hinweises auf die Patenterteilung: **05.06.2019**
(21) Anmeldenummer: 15801873.9
(22) Anmeldetag: 01.12.2015
(51) Int. Cl.: E06B 3/673, C03C 27/10, B32B 17/10, E06B 3/663, B32B 37/10

(54) **ABSTANDSHALTER FÜR ISOLIERVERGLASUNGEN**
SPACER FOR INSULATING GLAZING
ENTRETOISE POUR VITRAGES ISOLANTS

(30) Priorität: 08.12.2014 EP 14196698
(43) Veröffentlichungstag der Anmeldung: 18.10.2017
(73) Patentinhaber: Saint-Gobain Glass France, 92400 Courbevoie (FR)
(72) Erfinder: FRANK, Katrin, 71229 Leonberg (DE); SCHREIBER, Walter, 52074 Aachen (DE); SACU, Erol Ertugrul, 52222 Stolberg (DE); SUTER, Daniel, 8645 Jona (CH); UHLEMANN, Thomas, 78467 Konstanz (DE); PLUSKO, Damir, 8280 Kreuzlingen (CH)
(74) Vertreter: Gebauer, Dieter Edmund
(86) Internationale Anmeldenummer: PCT/EP2015/078144
(87) Internationale Veröffentlichungsnummer: WO 2016/091647

(56) Entgegenhaltungen:
- GB-A- 2 198 776

## Beschreibung

Die Erfindung betrifft einen Abstandshalter für Isolierverglasungen, eine Isolierverglasung, ein Verfahren zu deren Herstellung und deren Verwendung.

Die Wärmeleitfähigkeit von Glas ist etwa um den Faktor 2 bis 3 niedriger als die von Beton oder ähnlichen Baustoffen. Da Scheiben in den meisten Fällen jedoch deutlich dünner als vergleichbare Elemente aus Stein oder Beton ausgelegt sind, verlieren Gebäude dennoch häufig den größten Wärmeanteil über die Außenverglasung. Die notwendigen Mehrkosten für Heizung und Klimaanlagen machen einen nicht zu unterschätzenden Teil der Unterhaltungskosten eines Gebäudes aus. Zudem werden im Zuge strengerer Bauvorschriften niedrigere Kohlendioxid Emissionen gefordert. Ein wichtiger Lösungsansatz hierfür sind Dreifachisolierverglasungen, die vor allem im Zuge immer schneller steigender Rohstoffpreise und strengeren Umweltschutzauflagen nicht mehr aus dem Gebäudebau wegzudenken sind. Dreifachisolierverglasungen machen daher einen zunehmend größeren Teil der nach außen gerichteten Verglasungen aus.

Dreifachisolierverglasungen enthalten in der Regel drei Scheiben aus Glas oder polymeren Materialien, die über zwei einzelne Abstandshalter (Spacer) voneinander getrennt sind. Dabei wird auf eine Doppelverglasung mittels eines zusätzlichen Abstandshalters eine weitere Scheibe aufgesetzt. Bei Montage einer derartigen Dreifachverglasung gelten sehr geringe Toleranzvorgaben, da die beiden Abstandshalter in exakt der gleichen Höhe angebracht werden müssen. Somit ist die Montage von Dreifachverglasungen im Vergleich zu Doppelverglasungen wesentlich aufwändiger, da entweder zusätzliche Anlagenkomponenten für die Montage einer weiteren Scheibe bereitgestellt werden müssen oder ein zeitaufwändiger Mehrfachdurchlauf einer klassischen Anlage notwendig ist.

Das Wärmedämmvermögen von Dreifachisolierglas ist im Vergleich zu Einfach- oder Doppelverglasungen deutlich erhöht. Mit speziellen Beschichtungen, wie Low-E-Beschichtungen, kann dies noch weiter gesteigert und verbessert werden. Sogenannte Low-E-Beschichtungen bieten eine effektive Möglichkeit Infrarotstrahlung bereits vor Eintritt in den Wohnraum abzuschirmen und gleichzeitig Tageslicht hindurchzulassen. Low-E-Beschichtungen sind Wärmestrahlung reflektierende Beschichtungen, die einen erheblichen Teil der Infrarotstrahlung reflektieren, was im Sommer zu einer verringerten Erwärmung des Wohnraums führt. Die verschiedensten Low-E-Beschichtungen sind beispielsweise bekannt aus DE 10 2009 006 062 A1, WO 2007/101964 A1, EP 0 912 455 B1, DE 199 27 683 C1, EP 1 218 307 B1 und EP 1 917 222 B1. Derartige Low-E-Beschichtungen können nicht auf der mittleren Scheibe einer Dreifachverglasung nach dem Stand der Technik aufgebracht werden, da die Beschichtung bei Sonneneinstrahlung eine Erwärmung der Scheibe bedingt, die zu einem Versagen der Klebeverbindung zwischen mittlerer Scheibe und Abstandshaltern führt. Ferner erzeugt eine Verklebung der mittleren Scheibe mit Funktionsbeschichtung zusätzliche Spannungen. Zur Kompensation dieser Spannungen muss die mittlere Scheibe nach dem Stand der Technik vorgespannt werden.

EP 0 852 280 A1 offenbart einen Abstandshalter für Doppelisolierverglasungen. Der Abstandshalter umfasst eine Metall-Folie an der Verklebungsfläche und einen Glasfaseranteil im Kunststoff des Grundkörpers. Derartige Abstandshalter kommen häufig auch in Dreifachisolierverglasungen zum Einsatz, wobei ein erster Abstandshalter zwischen einer ersten äußeren Scheibe und der inneren Scheibe und ein zweiter Abstandshalter zwischen einer zweiten äußeren Scheibe und der inneren Scheibe montiert ist. Die beiden Abstandshalter müssen dabei deckungsgleich angebracht sein, um ein optisch ansprechendes Erscheinungsbild zu gewährleisten.

WO 2010/115456 A1 offenbart einen Hohlprofilabstandshalter mit mehreren Hohlkammern für Mehrfachglasscheiben umfassend zwei äußere Scheiben und eine oder mehrere mittlere Scheiben, die in einem nutförmigen Aufnahmeprofil angebracht sind. Der Abstandshalter kann dabei sowohl aus polymeren Materialien gefertigt werden als auch aus starren Metallen, wie Edelstahl oder Aluminium, bestehen.

DE 10 2009 057 156 A1 beschreibt eine Dreifachisolierverglasung, die einen schubsteifen Abstandshalter umfasst, der mit einem hochfesten Klebstoff mit beiden Außenscheiben schubsteif verbunden ist. Der Abstandshalter verfügt über eine Nut, in der die mittlere Scheibe der Dreifachverglasung eingesetzt ist.

Die in WO 2010/115456 A1 und in DE 10 2009 057 156 A1 beschriebenen Abstandshalter, die in einer Nut eine dritte Scheibe aufnehmen können, haben den Vorteil, dass nur ein einziger Abstandshalter montiert werden muss, und somit der Schritt der Justierung von zwei einzelnen Abstandshaltern bei den herkömmlichen Dreifachverglasungen entfällt. Bei der Herstellung einer Isolierverglasung unter Verwendung derartiger Abstandshalter, die eine dritte Scheibe in einer Nut aufnehmen, tritt allerdings folgendes Problem auf: Wie in WO 2010/115456 beschrieben, wird die mittlere Scheibe in der Nut des Abstandshalters vormontiert und dieser Abstandshalterrahmen mit Hilfe eines Dichtmittels zwischen die beiden Außengläser geklebt. Der Abstandshalterrahmen mit integrierter mittlerer Scheibe wird in diesem Zeitraum durch die Klebeverbindung zwischen Abstandshalter und Außengläsern in Position gehalten. Bei den handelsüblichen Abstandshalterrahmen ohne integrierte Glasscheibe reicht diese Klebeverbindung aus. Im Gegensatz dazu versagt die Klebeverbindung bei einem Abstandshalter mit integrierter mittlerer Scheibe durch das zusätzliche Gewicht der integrierten Scheibe, und der Abstandshalterrahmen sackt während der Isolierglasproduktion nach unten. Um ein Absacken des mittleren Glases zu verhindern, muss der Rahmen im Prozess zusätzlich unterstützt werden, wodurch der Zusammenbau des Isolierglases erheblich erschwert wird. Im folgenden Schritt wird eine äußere Versiegelung angebracht und das Glas wird zum Trocknen auf einen Rahmen gestellt. Das Material der äußeren Versiegelung ist zunächst weich und härtet erst über einen Zeitraum von typischerweise einigen Stunden aus. Gerade bei großen, schweren Scheiben kommt es auch in diesem Stadium noch zu einem Abrutschen des Abstandshalterrahmens mit mittlerem Glas, da die Versiegelungsmasse noch weich ist und verdrängt werden kann.

In GB2198776 ist ein Abstandshalter zur Aufnahme einer dritten Scheibe mit einem Steg auf der der Nut gegenüberliegenden Seite des Abstandshalters. Der Steg ist nicht direkt unterhalb der Nut angeordnet.

Die Aufgabe der vorliegenden Erfindung ist es, einen Abstandshalter für Isolierverglasungen bereitzustellen, der eine vereinfachte und verbesserte Montage der Isolierverglasung ermöglicht, eine Isolierverglasung sowie ein wirtschaftliches Verfahren zur Montage einer Isolierverglasung mit erfindungsgemäßem Abstandshalter bereitzustellen.

Die Aufgabe der vorliegenden Erfindung wird erfindungsgemäß durch einen Abstandshalter für Isolierverglasungen nach dem unabhängigen Anspruch 1 gelöst. Bevorzugte Ausführungen der Erfindung gehen aus den Unteransprüchen hervor.

Der erfindungsgemäße Abstandshalter für Isolierverglasungen umfasst mindestens einen polymeren Grundkörper, der eine erste Scheibenkontaktfläche und eine parallel dazu verlaufende zweite Scheibenkontaktfläche, eine erste Verglasungsinnenraumfläche, eine zweite Verglasungsinnenraumfläche und eine Außenfläche aufweist. Der polymere Grundkörper hat eine Wandstärke d. In den polymeren Grundkörper sind eine erste Hohlkammer und eine zweite Hohlkammer sowie eine Nut eingebracht. Die Nut verläuft dabei parallel zur ersten Scheibenkontaktfläche und zweiten Scheibenkontaktfläche und dient der Aufnahme einer Scheibe. Die erste Hohlkammer grenzt an die erste Verglasungsinnenraumfläche, während die zweite Hohlkammer an die zweite Verglasungsinnenraumfläche angrenzt, wobei die Verglasungsinnenraumflächen sich oberhalb der Hohlkammern befinden und die Außenfläche sich unterhalb der Hohlkammern befindet. Oberhalb ist in diesem Zusammenhang als dem Scheibeninnenraum einer Isolierverglasung mit erfindungsgemäßem Abstandshalter zugewandt und unterhalb als dem Scheibeninnenraum abgewandt definiert. Da die Nut zwischen der ersten Verglasungsinnenraumfläche und zweiten Verglasungsinnenraumfläche verläuft, begrenzt sie diese seitlich und trennt die erste Hohlkammer und die zweite Hohlkammer voneinander. Die Seitenflanken der Nut werden dabei von den Wänden der ersten Hohlkammer und der zweiten Hohlkammer gebildet. Die Nut bildet eine Vertiefung, die geeignet ist die mittlere Scheibe (dritte Scheibe) einer Isolierverglasung aufzunehmen. Dadurch wird die Position der dritten Scheibe über zwei Seitenflanken der Nut sowie die Bodenfläche der Nut fixiert. Auf der der Nut gegenüberliegenden Seite des erfindungsgemäßen Abstandshalters ist ein Steg angebracht. Der Steg befindet sich damit auf der Seite des erfindungsgemäßen Abstandshalters, die der Bodenfläche der Nut gegenüberliegt. Der Steg befindet sich direkt unterhalb der Nut, da dann eine besonders gute Stabilisierung der dritten Scheibe erreicht wird. Der Steg dient dazu, während der Herstellung der Isolierglasscheibe den Abstandshalterrahmen mit integriertem mittlerem Glas abzustützen und somit ein Absacken des Abstandshalterrahmens zu verhindern.

Somit wird durch die Erfindung ein doppelter Abstandshalter ("Doppelspacer") zur Verfügung gestellt, der eine vereinfachte und präzise Montage in einer Dreifachisolierverglasung ermöglicht. Dabei sind die beiden äußeren Scheiben (erste Scheibe und zweite Scheibe) an den Scheibenkontaktflächen angebracht, während die mittlere Scheibe (dritte Scheibe) in die Nut eingesetzt ist. Da der polymere Grundkörper als Hohlprofil ausgeformt ist, sind die Seitenflanken der Hohlkammern flexibel genug um einerseits beim Einsetzen der Scheibe in die Nut nachzugeben und andererseits die Scheibe spannungsfrei zu fixieren. Der unterhalb der Nut angebrachte Steg dient der Abstützung des Abstandshalterrahmens mit integrierter dritter Scheibe nach dem Verkleben der ersten und zweiten Scheibe mit den Scheibenkontaktflächen. So wird ein Abrutschen des Abstandshalterrahmens vor und nach dem Verpressen bzw. während des Aushärtens der äußeren Versiegelung verhindert. Der erfindungsgemäße Abstandshalter ermöglicht dadurch eine vereinfachte und dennoch passgenaue Montage der Dreifachverglasung. Bei Einsatz des erfindungsgemäßen Doppelspacers mit Steg ist ein Absacken des Abstandshalterrahmens mit mittlerem Glas, wie es mit den zuvor beschriebenen Abstandshaltern nach dem Stand der Technik passieren würde, unmöglich. Des Weiteren erfolgt die erfindungsgemäße Fixierung der dritten Scheibe durch eine Nut mit flexiblen Seitenflanken und nicht durch eine Klebeverbindung. Somit ermöglicht der erfindungsgemäße Abstandshalter die Herstellung einer Dreifachverglasung mit einer Low-E-Beschichtung auf der dritten Scheibe, ohne dass ein Vorspannen der dritten Scheibe notwendig ist. Bei einer Klebeverbindung oder einer anderweitigen starren Arretierung der Scheibe würde die durch die Low-E-Beschichtung bedingte Erwärmung der Scheibe ein Versagen der Klebeverbindung begünstigen. Ferner wäre eine Vorspannung der dritten Scheibe nötig, um auftretende Spannungen zu kompensieren. Bei Verwendung des erfindungsgemäßen Abstandshalters entfällt jedoch der Vorspannprozess, wodurch eine weitere Kostenreduzierung erreicht werden kann. Durch die erfindungsgemäße spannungsfreie Fixierung in einer Nut kann ferner die Dicke und somit das Gewicht der dritten Scheibe vorteilhaft reduziert werden.

Bevorzugt grenzt die Bodenfläche der Nut direkt an die Außenfläche des polymeren Grundkörpers, ohne dass sich eine oder beide Hohlkammern unterhalb der Nut erstrecken. Dadurch wird eine größtmögliche Tiefe der Nut erreicht, wobei die Fläche der Seitenflanken zur Stabilisierung der Scheibe maximiert wird.

Die Hohlkammern des erfindungsgemäßen Abstandshalters tragen nicht nur zur Flexibilität der Seitenflanken bei, sondern führen des Weiteren zu einer Gewichtsreduktion im Vergleich zu einem massiv ausgeformten Abstandshalter und können zur Aufnahme von weiteren Komponenten, wie beispielsweise eines Trockenmittels, zur Verfügung stehen.

Die erste Scheibenkontaktfläche und die zweite Scheibenkontaktfläche stellen die Seiten des Abstandshalters dar, an denen beim Einbau des Abstandshalters die Montage der äußeren Scheiben (erste Scheibe und zweite Scheibe) einer Isolierverglasung erfolgt. Die erste Scheibenkontaktfläche und die zweite Scheibenkontaktfläche verlaufen parallel zueinander.

Die Verglasungsinnenraumflächen sind als die Flächen des polymeren Grundkörpers definiert, die nach Einbau des Abstandshalters in einer Isolierverglasung in Richtung des Innenraums der Verglasung weisen. Die erste Verglasungsinnenraumfläche liegt dabei zwischen der ersten und der dritten Scheibe, während die zweite Verglasungsinnenraumfläche zwischen der dritten und der zweiten Scheibe angeordnet ist.

Die Außenfläche des polymeren Grundkörpers ist die den Verglasungsinnenraumflächen gegenüberliegende Seite, die vom Innenraum der Isolierverglasung weg in Richtung einer äußeren Isolierschicht weist. Die Außenfläche verläuft bevorzugt senkrecht zu den Scheibenkontaktflächen. Die den Scheibenkontaktflächen nächstliegenden Abschnitte der Außenfläche können jedoch alternativ in einem Winkel von bevorzugt 30° bis 60° zur Außenfläche in Richtung der Scheibenkontaktflächen geneigt sein. Diese abgewinkelte Geometrie verbessert die Stabilität des polymeren Grundkörpers und ermöglicht eine bessere Verklebung des erfindungsgemäßen Abstandshalters mit einer Barrierefolie. Eine planare Außenfläche, die sich in ihrem gesamten Verlauf senkrecht zu den Scheibenkontaktflächen verhält, hat hingegen den Vorteil, dass die Dichtfläche zwischen Abstandshalter und Scheibenkontaktflächen maximiert wird und eine einfachere Formgebung den Produktionsprozess erleichtert.

In einer bevorzugten Ausführungsform ist eine gas- und dampfdichte Barriere auf der Außenfläche des polymeren Grundkörpers und mindestens einem Teil der Scheibenkontaktflächen angeordnet. Der Steg ist auf der Barriere angebracht. Die gas- und dampfdichte Barriere verbessert die Dichtigkeit des Abstandshalters gegen Gasverlust und Eindringen von Feuchtigkeit. In dieser Ausführungsform sind der Grundkörper und der Steg zweistückig ausgeführt. Zweistückig bedeutet, dass Grundkörper und Steg separat in zwei Stücken gefertigt werden. Die Barriere wird dabei nur auf die Außenfläche des polymeren Grundkörpers und einen Teil der Scheibenkontaktflächen, bevorzugt auf etwa die Hälfte bis zwei Drittel der Scheibenkontaktflächen, aufgebracht. Der Steg wird nachträglich auf die Barriere auf der Außenfläche des polymeren Grundkörpers angeklebt, angesteckt oder anextrudiert. Der Steg kann in diesem Fall aus einem kostengünstigen Material gefertigt werden, das bevorzugt eine geringe Wärmeleitfähigkeit besitzt. Im Vergleich zu einer einstückigen Ausführung von polymerem Grundkörper und Steg, bei der die Barriere auch die freiliegenden Flächen des Stegs umschließt, kann Material für die Barrierebeschichtung oder die Barrierefolie eingespart werden. Die Barriere ist zudem bei der zweistückigen Ausführung in der fertigen Isolierverglasung keinen mechanischen Belastungen ausgesetzt und somit vor Beschädigungen geschützt. In einer besonders bevorzugten Ausführungsform ist der Steg als T-Profil ausgebildet. Der Steg umfasst in dem Fall zwei Seitenarme, die an die Barriere angrenzen. Die zwei Seitenarme tragen zu einer Verbesserung der Stabilität des Abstandshalters bei, da die Kontaktfläche zwischen Steg und Barriere vergrößert wird. Die Seitenarme können sich über die gesamte Außenfläche des polymeren Grundkörpers erstrecken oder nur einen Teil der Außenfläche bedecken. Bevorzugt bedecken sie etwa 40 % bis 60 % der Außenfläche. Die Dicke der Seitenarme beträgt zwischen 1 mm und 3 mm. Bei diesen Abmessungen wird eine besonders gute Stabilität des Stegs erzielt.

In einer alternativen vorteilhaften Ausführungsform ist der polymere Grundkörper mit dem Steg in einem Stück extrudiert oder co-extrudiert, wodurch eine sehr stabile Verbindung zwischen Grundkörper und Steg entsteht. In dieser Ausführungsform ist auf der Außenfläche des polymeren Grundkörpers, auf mindestens einem Teil der Scheibenkontaktflächen, auf den Seitenflächen des Stegs und auf der Kante des Stegs eine gas- und dampfdichte Barriere angebracht. Die gas- und dampfdichte Barriere verbessert die Dichtigkeit des Abstandshalters gegen Gasverlust und Eindringen von Feuchtigkeit. Besonders bevorzugt besteht der Steg aus demselben Material wie der polymere Grundkörper, und der polymere Grundkörper wird mit dem Steg in einem Stück extrudiert, was vorteilhaft für die Produktion ist und wodurch Materialunverträglichkeiten vermieden werden. Im Vergleich zur zuvor beschriebenen Ausführungsform mit nachträglich angebrachtem Steg entfällt durch die Co-extrusion von Steg und Grundkörper ein Produktionsschritt.

Die Seitenflächen des Stegs sind die Flächen des Stegs, die nach Einbau des Abstandshalters in einer Isolierverglasung zur ersten Scheibe und zur zweiten Scheibe weisen und parallel zu diesen verlaufen. Die Seitenflächen können alternativ auch in die eine oder andere Richtung geneigt sein. Die Seitenflächen stehen in der fertigen Isolierverglasung in Kontakt mit der äußeren Versiegelung. Die Kante des Stegs bezeichnet die untere Fläche des Stegs, die vom Scheibeninnenraum weg weist und nach Einbau in eine Isolierverglasung zur äußeren Umgebung weist. Die Kante des Stegs entspricht der Querfläche, die die beiden Seitenflächen des Stegs verbindet. Der Steg umfasst demnach drei freiliegende Flächen: zwei Seitenflächen und die Kante des Stegs.

In einer bevorzugten Ausführungsform ist die Barriere als Folie ausgeführt. Diese Barrierefolie enthält mindestens eine polymere Schicht sowie eine metallische Schicht oder eine keramische Schicht. Dabei beträgt die Schichtdicke der polymeren Schicht zwischen 5 µm und 80 µm, während metallische Schichten und/oder keramische Schichten mit einer Dicke von 10 nm bis 200 nm eingesetzt werden. Innerhalb der genannten Schichtdicken wird eine besonders gute Dichtigkeit der Barrierefolie erreicht.

Besonders bevorzugt enthält die Barrierefolie mindestens zwei metallische Schichten und/oder keramische Schichten, die alternierend mit mindestens einer polymeren Schicht angeordnet sind. Bevorzugt werden die außen liegenden Schichten dabei von der polymeren Schicht gebildet. Die alternierenden Schichten der Barrierefolie können auf die verschiedensten nach dem Stand der Technik bekannten Methoden verbunden bzw. aufeinander aufgetragen werden. Methoden zur Abscheidung metallischer oder keramischer Schichten sind dem Fachmann hinlänglich bekannt. Die Verwendung einer Barrierefolie mit alternierender Schichtenabfolge ist besonders vorteilhaft im Hinblick auf die Dichtigkeit des Systems. Ein Fehler in einer der Schichten führt dabei nicht zu einem Funktionsverlust der Barrierefolie. Im Vergleich dazu kann bei einer Einzelschicht bereits ein kleiner Defekt zu einem vollständigen Versagen führen. Des Weiteren ist die Auftragung mehrerer dünner Schichten im Vergleich zu einer dicken Schicht vorteilhaft, da mit steigender Schichtdicke die Gefahr interner Haftungsprobleme ansteigt. Ferner verfügen dickere Schichten über eine höhere Leitfähigkeit, so dass eine derartige Folie thermodynamisch weniger geeignet ist.

Die polymere Schicht der Folie umfasst bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon. Die metallische Schicht enthält bevorzugt Eisen, Aluminium, Silber, Kupfer, Gold, Chrom und/oder Legierungen oder Oxide davon. Die keramische Schicht der Folie enthält bevorzugt Siliziumoxide und/oder Siliziumnitride.
Die Folie weist bevorzugt eine Gaspermeation kleiner als 0,001 g/(m² h) auf.

Der Verbund aus polymerem Grundkörper und Folie weist bevorzugt einen PSI-Wert kleiner(gleich) als 0,05 W/mK, besonders bevorzugt kleiner(gleich) als 0,035 W/mK auf. Die Barrierefolie kann auf dem polymeren Grundkörper aufgebracht werden, beispielsweise geklebt werden. Alternativ kann die Folie mit dem Grundkörper zusammen co-extrudiert werden.

Wenn der Grundkörper mit dem Steg co-extrudiert ist, ist die gas- und dampfdichte Barriere bevorzugt als Beschichtung ausgeführt. Diese Barrierebeschichtung enthält Aluminium, Aluminiumoxide und / oder Siliciumoxide und wird bevorzugt über ein PVD-Verfahren (physikalische Gasphasenabscheidung) aufgebracht. Dadurch kann das Herstellungsverfahren erheblich vereinfacht werden, da das Bauteil direkt nach der Extrusion mit der Barrierebeschichtung versehen wird und kein gesonderter Schritt zum Aufbringen einer Folie nötig ist. Die Beschichtung enthaltend Aluminium, Aluminiumoxide und / oder Siliciumoxide liefert besonders gute Ergebnisse im Hinblick auf Dichtigkeit und zeigt zusätzlich exzellente Haftungseigenschaften zu den in Isolierverglasungen verwendeten Materialien der äußeren Versiegelung.

Die Nut entspricht in ihrer Breite mindestens der Dicke der einzusetzenden Scheibe.

Bevorzugt ist die Nut breiter als die darin montierte Scheibe, so dass zusätzlich eine Einlage in die Nut eingesetzt werden kann, die ein Verrutschen der Scheibe und eine dadurch bedingte Geräuschentwicklung beim Öffnen und Schließen des Fensters verhindert. Die Einlage kompensiert des Weiteren die thermische Ausdehnung der dritten Scheibe bei Erwärmung, so dass unabhängig von den klimatischen Bedingungen eine spannungsfreie Fixierung gewährleistet ist. Ferner ist die Verwendung einer Einlage vorteilhaft in Bezug auf die Minimierung der Variantenvielfalt des Abstandshalters. Um die Variantenvielfalt möglichst gering zu halten und trotzdem eine variable Dicke der mittleren Scheibe zu ermöglichen, kann ein Abstandshalter mit verschiedenen Einlagen eingesetzt werden. Die Variation der Einlage ist dabei bezüglich der Produktionskosten wesentlich günstiger als die Variation des Abstandshalters. Die Einlage enthält bevorzugt ein Elastomer, besonders bevorzugt einen Butylkautschuk.

Die Einlage ist bevorzugt so angebracht, dass der erste innere Scheibenzwischenraum, der zwischen erster Scheibe und dritter Scheibe liegt, mit dem zweiten inneren Scheibenzwischenraum, der zwischen dritter Scheibe und zweiter Scheibe liegt, so verbunden ist, dass ein Luft- bzw. Gasaustausch möglich ist. Dadurch wird ein Druckausgleich zwischen den inneren Scheibenzwischenräumen ermöglicht, was im Vergleich zu einer Ausführung mit hermetisch abgeschlossenen inneren Scheibenzwischenräumen zu einer deutlichen Reduktion der Klimalasten führt. Um diesen Druckausgleich zu ermöglichen, ist die Einlage bevorzugt mit Unterbrechungen in der Nut des polymeren Grundkörpers angebracht. Das heißt, die Einlage ist nicht durchgehend entlang des gesamten Abstandshalterprofils angebracht, sondern nur in einzelnen Bereichen, in denen die Scheibe fixiert wird, um ein Klappern der Scheibe in der Nut zu verhindern. In den Bereichen ohne Einlage kann ein Druckausgleich stattfinden.

In einer anderen bevorzugten Ausführungsform wird der erfindungsgemäße Abstandshalter ohne Einlage in der Nut montiert. Bevorzugt ist die Wandstärke d' der Seitenflanken im Vergleich zur Wandstärke d des polymeren Grundkörpers reduziert, wodurch eine erhöhte Flexibilität der Seitenflanken entsteht. Wenn d' kleiner als d gewählt wird kann die Flexibilität der Seitenflanken erhöht werden, so dass diese eine thermische Ausdehnung der dritten Scheibe auch ohne Verwendung einer Einlage kompensieren und somit jederzeit eine spannungsfreie Fixierung gewährleistet ist. Es hat sich gezeigt, dass eine Wandstärke der Seitenflanken von d'< 0,85 d, bevorzugt von d' < 0,7 d, besonders bevorzugt von d' < 0,5 d, dazu besonders geeignet ist. Wenn keine Einlage in die Nut eingepasst wird sind der erste Scheibenzwischenraum und der zweite Scheibenzwischenraum nicht luftdicht voneinander abgeschlossen. Dies hat den Vorteil, dass eine Luftzirkulation erzeugt werden kann, insbesondere wenn ein Druckausgleichssystem in den Abstandshalter integriert wird.

In einer weiteren bevorzugten Ausführungsform werden die beschriebenen Ausführungsformen kombiniert, wobei sowohl eine Einlage verwendet wird als auch die Wandstärke der Seitenflanken reduziert wird. Dadurch erfolgt eine Kompensation der thermischen Ausdehnung der dritten Scheibe sowohl durch die Flexibilität der Seitenflanken als auch zusätzlich durch die Einlage. Gleichzeitig verbleibt die Möglichkeit die Dicke der dritten Scheibe in gewissem Maße zu variieren und dies durch die Wahl der Einlage auszugleichen. In einer vorteilhaften Ausführungsform ist die Einlage direkt an den polymeren Grundkörper angeformt und somit einstückig mit diesem ausgebildet, wobei der polymere Grundkörper und die Einlage co-extrudiert sind. Alternativ wäre auch denkbar die Einlage direkt an den polymeren Grundkörper anzuformen, beispielsweise indem beide Bauteile gemeinsam in einem Zweikomponentenspritzgussverfahren gefertigt werden.

Die Seitenflanken der Nut können sowohl parallel zu den Scheibenkontaktflächen verlaufen als auch in die eine oder andere Richtung geneigt sein. Durch eine Neigung der Seitenflanken in Richtung der dritten Scheibe wird eine Verjüngung erzeugt, die dazu dienen kann die dritte Scheibe gezielt zu fixieren. Des Weiteren sind auch gewölbte Seitenflanken denkbar, wobei nur der mittlere Abschnitt der Seitenflanken an der dritten Scheibe anliegt. Eine derartige Wölbung der Seitenflanken ist besonders vorteilhaft in Verbindung mit einer reduzierten Wandstärke d' der Seitenflanken. Die gewölbten Seitenflanken verfügen über eine sehr gute Federwirkung, insbesondere bei geringen Wandstärken. Dadurch wird die Flexibilität der Seitenflanken weiter erhöht, so dass eine thermische Ausdehnung der dritten Scheibe besonders vorteilhaft kompensiert werden kann. In einer bevorzugten Ausführungsform sind die gewölbten Seitenflanken der Scheibe aus einem anderen Material gefertigt als der polymere Grundkörper und mit diesem co-extrudiert. Dies ist besonders vorteilhaft, da so die Flexibilität der Seitenflanken durch die Wahl eines geeigneten Materials selektiv erhöht werden kann, während die Steifigkeit des polymeren Grundkörpers erhalten bleibt.

Der polymere Grundkörper weist bevorzugt entlang der Verglasungsinnenraumflächen eine Gesamtbreite von 10 mm bis 50 mm, besonders bevorzugt von 20 mm bis 36 mm, auf. Durch die Wahl der Breite der Verglasungsinnenraumflächen wird der Abstand zwischen erster und dritter Scheibe bzw. zwischen dritter und zweiter Scheibe bestimmt. Bevorzugt sind die Breiten der ersten Verglasungsinnenraumfläche und der zweiten Verglasungsinnenraumfläche gleich. Alternativ sind auch asymmetrische Abstandshalter möglich, bei denen die beiden Verglasungsinnenraumflächen unterschiedliche Breiten haben. Das genaue Abmaß der Verglasungsinnenraumflächen richtet sich nach den Dimensionen der Isolierverglasung und den gewünschten Scheibenzwischenraumgrößen.

Der polymere Grundkörper weist bevorzugt entlang der Scheibenkontaktflächen eine Höhe von 5 mm bis 15 mm, besonders bevorzugt von 5 mm bis 10 mm, auf.

Die Nut weist bevorzugt eine Tiefe von 1 mm bis 15 mm, besonders bevorzugt von 2 mm bis 4 mm auf. Dadurch kann eine stabile Fixierung der dritten Scheibe erreicht werden.

Die Wandstärke d des polymeren Grundkörpers beträgt 0,5 mm bis 15 mm, bevorzugt 0,5 mm bis 10 mm, besonders bevorzugt 0,7 mm bis 1 mm.

Die Seitenflächen des Stegs können sowohl parallel zur ersten Scheibe und zweiten Scheibe verlaufen als auch in die eine oder andere Richtung geneigt sein. Die Höhe b des Stegs gibt die Abmessungen des äußeren Scheibenzwischenraums der fertigen Isolierverglasung vor, da seine Kante sich auf gleicher Höhe mit den Kanten der äußeren Scheiben befindet. Die Höhe b liegt bevorzugt zwischen 2 mm und 8 mm. Die Breite a des Stegs stimmt bevorzugt mit der Breite der Nut an der Bodenfläche überein, da so eine besonders gute Stabilisierung des Abstandshalterrahmens erzielt wird. Auch wenn die Breite a des Stegs größer ist als die Breite der Nut, wird dieser Effekt erzielt. Die Breite a des Stegs beträgt bevorzugt zwischen 1 mm und 10 mm, besonders bevorzugt zwischen 2 mm und 5 mm.

Der polymere Grundkörper enthält bevorzugt ein Trockenmittel, bevorzugt Kieselgele, Molekularsiebe, CaCl₂, Na₂SO₄, Aktivkohle, Silikate, Bentonite, Zeolithe und/oder Gemische davon. Das Trockenmittel ist bevorzugt in den Grundkörper eingearbeitet. Besonders bevorzugt befindet sich das Trockenmittel in der ersten und zweiten Hohlkammer des Grundkörpers.

In einer bevorzugten Ausführungsform weisen die erste Verglasungsinnenraumfläche und/oder die zweite Verglasungsinnenraumfläche mindestens eine Öffnung auf. Bevorzugt sind mehrere Öffnungen an beiden Verglasungsinnenraumflächen angebracht. Die Gesamtzahl der Öffnungen hängt dabei von der Größe der Isolierverglasung ab. Die Öffnungen verbinden die Hohlkammern mit den Scheibenzwischenräumen, wodurch ein Gasaustausch zwischen diesen möglich wird. Dadurch wird eine Aufnahme von Luftfeuchtigkeit durch ein in den Hohlkammern befindliches Trockenmittel erlaubt und somit ein Beschlagen der Scheiben verhindert. Die Öffnungen sind bevorzugt als Schlitze ausgeführt, besonders bevorzugt als Schlitze mit einer Breite von 0,2 mm und einer Länge von 2 mm. Die Schlitze gewährleisten einen optimalen Luftaustausch ohne dass Trockenmittel aus den Hohlkammern in die Scheibenzwischenräume eindringen kann.

Der polymere Grundkörper enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon.

Bevorzugt ist der polymere Grundkörper glasfaserverstärkt. Durch die Wahl des Glasfaseranteils im Grundkörper kann der Wärmeausdehnungskoeffizient des Grundkörpers variiert und angepasst werden. Durch Anpassung des Wärmeausdehnungskoeffizienten des polymeren Grundkörpers und der Barrierefolie oder Barrierebeschichtung lassen sich temperaturbedingte Spannungen zwischen den unterschiedlichen Materialien und ein Abplatzen der Barrierefolie oder der Barrierebeschichtung vermeiden. Der Grundkörper weist bevorzugt einen Glasfaseranteil von 20 % bis 50 %, besonders bevorzugt von 30 % bis 40 % auf. Der Glasfaseranteil im polymeren Grundkörper verbessert gleichzeitig die Festigkeit und Stabilität.

In einer weiteren bevorzugten Ausführungsform enthält der polymere Grundkörper Polymere und ist gefüllt durch Glashohlkugeln oder Glasblasen. Diese Glashohlkugeln haben einen Durchmesser von 10 µm bis 20 µm und verbessern die Stabilität des polymeren Grundkörpers. Geeignete Glaskugeln sind unter dem Namen "3M™ Glass Bubbles" käuflich erhältlich. Besonders bevorzugt enthält der polymere Grundkörper Polymere, Glasfasern und Glaskugeln. Eine Beimischung von Glaskugeln führt zu einer Verbesserung der thermischen Eigenschaften des Abstandhalters.

Der Steg enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon. Optional kann der Steg auch glasfaserverstärkt sein. Besonders bevorzugt besteht der Steg aus demselben Material wie das Grundmaterial, damit der Steg und der polymere Grundkörper den gleichen Längenausdehnungskoeffizient haben. Dies trägt zu einer verbesserten Stabilität des Abstandshalters bei.

Die Erfindung umfasst des Weiteren eine Isolierverglasung mit mindestens einer ersten Scheibe, einer zweiten Scheibe und einer dritten Scheibe und einen umlaufenden zwischen erster und zweiter Scheibe angeordneten erfindungsgemäßen Abstandshalter. Die erste Scheibe liegt dabei an der ersten Scheibenkontaktfläche des Abstandshalters an, während die zweite Scheibe an der zweiten Scheibenkontaktfläche anliegt. Die dritte Scheibe ist in die Nut des Abstandshalters eingesetzt. Die erste Scheibe und die zweite Scheibe sind parallel und deckungsgleich angeordnet. Die Kanten der beiden Scheiben sind daher im Randbereich bündig angeordnet, das heißt sie befinden sind auf gleicher Höhe. Der Abstandshalter ist so eingesetzt, dass die Kante des Stegs sich auf gleicher Höhe mit den Kanten der beiden Scheiben befindet und somit bündig mit diesen angeordnet ist. Der Steg des Abstandshalters teilt damit den äußeren Scheibenzwischenraum in zwei äußere Scheibenzwischenräume, einen ersten äußeren Scheibenzwischenraum und einen zweiten äußeren Scheibenzwischenraum. Der äußere Scheibenzwischenraum ist definiert als der Raum, der durch die erste Scheibe, die zweite Scheibe und die Außenfläche des Abstandshalters begrenzt ist. Die äußeren Scheibenzwischenräume sind mit einer äußeren Versiegelung verfüllt. Als äußere Versiegelung wird beispielsweise eine plastische Abdichtmasse verwendet. Da das Material des Stegs eine geringere thermische Leitfähigkeit hat als die äußere Versiegelung, findet durch den Steg eine thermische Trennung statt. Die thermische Entkopplung führt zu einem verbesserten PSI-Wert (der längenbezogene Wärmedurchgangskoeffizient) und damit zu einer Verbesserung der wärmeisolierenden Eigenschaften des Randverbundes der Isolierverglasung.

Bevorzugt enthält die äußere Versiegelung Polymere oder silanmodifizierte Polymere, besonders bevorzugt organische Polysulfide, Silikone, raumtemperturvernetzenden (RTV) Silikonkautschuk, peroxidischvernetzten Silikonkautschuk und/oder additionsvernetzten Silikonkautschuk, Polyurethane und/oder Butylkautschuk.

An den Ecken der Isolierverglasung sind die Abstandshalter bevorzugt über Eckverbinder miteinander verknüpft. Derartige Eckverbinder können beispielsweise als Kunststoffformteil mit Dichtung ausgeführt sein, in dem zwei mit einem Gärungsschnitt versehene Abstandshalter zusammenstoßen. Grundsätzlich sind verschiedenste Geometrien der Isolierverglasung möglich, beispielsweise rechteckige, trapezförmige und abgerundete Formen. Zur Herstellung runder Geometrien kann der erfindungsgemäße Abstandshalter beispielsweise im erwärmten Zustand gebogen werden.

Die Scheiben der Isolierverglasung sind mit dem Abstandshalter über eine Dichtung verbunden. Zwischen der ersten Scheibe und der ersten Scheibenkontaktfläche und/oder der zweiten Scheibe und der zweiten Scheibenkontaktfläche ist dazu eine Dichtung angebracht. Die Dichtung enthält ein Polyisobutylen. Das Polyisobutylen kann ein vernetzendes oder nicht vernetzendes Polyisobutylen sein.

Die erste Scheibe, die zweite Scheibe und/oder die dritte Scheibe der Isolierverglasung enthalten bevorzugt Glas und/oder Polymere, besonders bevorzugt Quarzglas, Borosilikatglas, Kalk-Natron-Glas, Polymethylmethacrylat und/oder Gemische davon. Die erste Scheibe und die zweite Scheibe verfügen über eine Dicke von 2 mm bis 50 mm, bevorzugt 3 mm bis 16 mm, wobei beide Scheiben auch unterschiedliche Dicken haben können. Die dritte Scheibe hat eine Dicke von 1 mm bis 4 mm, bevorzugt von 1 mm bis 3 mm und besonders bevorzugt von 1,5 mm bis 3 mm. Der erfindungsgemäße Abstandshalter ermöglicht durch die spannungsfreie Fixierung eine vorteilhafte Reduzierung der Dicke der dritten Scheibe bei gleichbleibender Stabilität der Verglasung. Bevorzugt ist die Dicke der dritten Scheibe geringer als die Dicken der ersten und zweiten Scheibe. In einer möglichen Ausführungsform beträgt die Dicke der ersten Scheibe 3 mm, die Dicke der zweiten Scheibe 4 mm und die Dicke der dritten Scheibe 2 mm. Eine solche asymmetrische Kombination der Scheibendicken führt zu einer erheblichen Verbesserung der akustischen Dämpfung.

Die Isolierverglasung ist mit einem Schutzgas, bevorzugt mit einem Edelgas, vorzugsweise Argon oder Krypton befüllt, die den Wärmeübergangswert im Isolierverglasungszwischenraum reduzieren.

Die dritte Scheibe der Isolierverglasung weist bevorzugt eine Low-E-Beschichtung auf.

Die dritte Scheibe der Isolierverglasung ist bevorzugt nicht vorgespannt. Durch das Einsparen des Vorspannprozesses können die Herstellungskosten reduziert werden.

In einer weiteren Ausführungsform umfasst die Isolierverglasung mehr als drei Scheiben. Dabei kann der Abstandshalter mehrere Nuten enthalten, die weitere Scheiben aufnehmen können. In diesem Fall kann ein Steg pro Abstandshalter angebracht sein oder pro Nut jeweils ein weiterer Steg unterhalb der entsprechenden Nut angebracht sein.

Es könnten auch mehrere Scheiben als Verbundglasscheibe ausgebildet sein.

Die Erfindung umfasst ferner ein Verfahren zur Herstellung einer erfindungsgemäßen Isolierverglasung umfassend die Schritte:
a) Einsetzen der dritten Scheibe in die Nut des Abstandshalters,
b) Anbringen der ersten Scheibe auf der ersten Scheibenkontaktfläche des Abstandshalters,
c) Anbringen der zweiten Scheibe auf der zweiten Scheibenkontaktfläche des Abstandshalters und
d) Verpressen der Scheibenanordnung.

Nach Einsetzen der dritten Scheibe in die Nut des Abstandshalters kann dieses vormontierte Bauteil auf einer klassischen dem Fachmann bekannten Doppelverglasungsanlage verarbeitet werden. Die kostspielige Installation zusätzlicher Anlagenkomponenten oder ein Zeitverlust bei Mehrfachdurchlauf einer Anlage wie bei der Verwendung von mehreren Abstandshaltern können somit vermieden werden. Dies ist besonders vorteilhaft hinsichtlich eines Produktivitätsgewinns und einer Kostensenkung. Ferner ist auch bei Verwendung von Low-E- oder anderen Funktionsbeschichtungen auf der dritten Scheibe nach dem erfindungsgemäßen Verfahren kein Vorspannen der dritten Scheibe notwendig, da der erfindungsgemäße Abstandshalter die Scheibe spannungsfrei in ihrem Umfang fixiert. Bei der Verwendung eines Abstandshalters nach dem Stand der Technik, der eine dritte Scheibe in einer Nut aufnimmt, kann es aufgrund des zusätzlichen Gewichts der dritten Scheibe zu einem Versagen der Dichtung zwischen Scheibenkontaktflächen und erster und zweiter Scheibe kommen. Dies führt während der Herstellung zu einem Absacken des Abstandshalterrahmens mit dritter Scheibe. Durch den Steg des erfindungsgemäßen Abstandshalters wird dieses Absacken oder Abrutschen verhindert, wodurch ansonsten erforderliche Maßnahmen zur Abstützung des Rahmens vor und nach dem Verpressen der Scheiben überflüssig werden. Zudem verhindert die Ausführung mit Steg, dass der Abstandshalterrahmen abrutscht, während die äußere Versiegelung aushärtet. Durch den erfindungsgemäßen Abstandshalter kann die Herstellung einer Dreifachverglasung somit erheblich verbessert und vereinfacht werden.

In einer bevorzugten Ausführungsform des Verfahrens wird zunächst der Abstandshalter zu einem einseitig offenen Rechteck vorgeformt. Dabei können beispielsweise drei Abstandshalter mit einem Gärungsschnitt versehen und an den Ecken durch Eckverbinder verknüpft werden. Anstelle dessen können die Abstandshalter auch direkt miteinander verschweißt werden, beispielsweise mittels Ultraschallschweißen. In die U-förmig angeordneten Abstandshalter wird von der offenen Seite der Anordnung ausgehend die dritte Scheibe in die Nut des Abstandshalters eingeschoben. Die verbleibende offene Kante der dritten Scheibe wird daraufhin ebenfalls mit einem Abstandshalter geschlossen. Optional kann vor der Montage der Abstandshalter eine Einlage auf die Scheibenkanten aufgebracht werden. Danach erfolgt die Verarbeitung des vormontierten Bauteils nach dem erfindungsgemäßen Verfahren, wobei im nächsten Schritt die erste Scheibe an der ersten Scheibenkontaktfläche angebracht wird.

Bevorzugt werden die Scheibenzwischenräume zwischen erster Scheibe und dritter Scheibe sowie zwischen zweiter Scheibe und dritter Scheibe vor dem Verpressen der Scheibenanordnung mit einem Schutzgas gefüllt.

Bevorzugt werden die äußeren Scheibenzwischenräume mit einer äußeren Versiegelung gefüllt. Da der gesamte äußere Scheibenzwischenraum zwischen den äußeren Scheiben durch den Steg des erfindungsgemäßen Abstandshalters in zwei schmalere Scheibenzwischenräume geteilt wird, kann das Verfüllen auf einer Standard-Anlage zum Befüllen von Dreifachisolierverglasungen durchgeführt werden. Diese Anlagen verwenden in der Regel zwei Düsen, die jeweils zwischen einer äußeren Scheibe und daneben liegenden mittleren Scheibe entlanggeführt werden, wobei die beiden Scheibenkanten als Führung dienen. Der Steg des Abstandshalters übernimmt hierbei die Funktion der mittleren Scheibe und dient als Führungshilfe für die Düsen zum Befüllen der äußeren Scheibenzwischenräume mit dem Material der äußeren Versiegelung.

Die Erfindung umfasst des Weiteren die Verwendung eines erfindungsgemäßen Abstandshalters in Mehrfachverglasungen, bevorzugt in Isolierverglasungen, besonders bevorzugt in Dreifachisolierverglasungen.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
- Figur 1: eine mögliche Ausführungsform des erfindungsgemäßen Abstandshalters,
- Figur 2: eine weitere mögliche Ausführungsform des erfindungsgemäßen Abstandshalters,
- Figur 3: einen Querschnitt einer möglichen Ausführungsform der erfindungsgemäßen Isolierverglasung,
- Figur 4: einen Querschnitt einer weiteren möglichen Ausführungsform der erfindungsgemäßen Isolierverglasung,
- Figur 5: einen Querschnitt einer weiteren möglichen Ausführungsform der erfindungsgemäßen Isolierverglasung und
- Figur 6: ein Flussdiagramm einer möglichen Ausführungsform des erfindungsgemäßen Verfahrens.

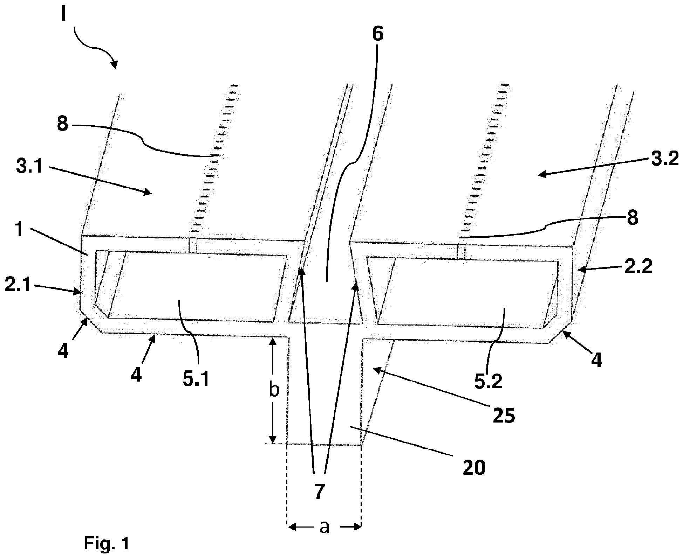

Figur 1 zeigt einen Querschnitt des erfindungsgemäßen Abstandshalters I. Der glasfaserverstärkte polymere Grundkörper 1 umfasst eine erste Scheibenkontaktfläche 2.1, eine parallel dazu verlaufende zweite Scheibenkontaktfläche 2.2, eine erste Verglasungsinnenraumfläche 3.1, eine zweite Verglasungsinnenraumfläche 3.2 und eine Außenfläche 4. Zwischen der Außenfläche 4 und der ersten Verglasungsinnenraumfläche 3.1 befindet sich eine erste Hohlkammer 5.1, während eine zweite Hohlkammer 5.2 zwischen der Außenfläche und der zweiten Verglasungsinnenraumfläche 3.2 angeordnet ist. Zwischen den beiden Hohlkammern 5.1 und 5.2 befindet sich eine Nut 6, die parallel zu den Scheibenkontaktflächen 2.1 und 2.2 verläuft. Die Seitenflanken 7 der Nut 6 werden dabei von den Wänden der beiden Hohlkammern 5.1 und 5.2 gebildet, während die Bodenfläche der Nut 6 an den Steg grenzt. Die Seitenflanken 7 der Nut 6 sind nach innen in Richtung einer in der Nut 6 aufzunehmenden Scheibe geneigt. Dadurch entsteht in Höhe der Verglasungsinnenraumflächen 3.1 und 3.2 eine Verjüngung der Nut 6, die die Fixierung einer Scheibe in der Nut 6 begünstigt. Die Wandstärke d des polymeren Grundkörpers beträgt 1 mm, während die reduzierte Wandstärke d' im Bereich der Seitenflanken 0,8 mm beträgt. Die Außenfläche 4 verläuft größtenteils senkrecht zu den Scheibenkontaktflächen 2.1 und 2.2 und parallel zu den Verglasungsinnenraumflächen 3.1 und 3.2. Die den Scheibenkontaktflächen 2.1 und 2.2 nächstliegenden Abschnitte der Außenfläche 4 sind jedoch in einem Winkel von bevorzugt 30° bis 60° zur Außenfläche 4 in Richtung der Scheibenkontaktflächen 2.1 und 2.2 geneigt. Diese abgewinkelte Geometrie verbessert die Stabilität des polymeren Grundkörpers 1 und ermöglicht eine bessere Verklebung des erfindungsgemäßen Abstandshalters I mit einer Barrierefolie. Unterhalb der Nut 6 ist ein Steg 20 angebracht, der den Abstandshalterrahmen während der Isolierglasherstellung in der korrekten Position hält. Der Steg 20 ist zusammen mit dem polymeren Grundkörper einstückig ausgeführt. Die Breite a des Stegs 20 entspricht der Breite der Nut 6 im Bereich der Bodenfläche und beträgt 3 mm. Die Höhe b des Stegs beträgt 4,5 mm. Die Seitenflächen 25 stehen in der fertigen Isolierverglasung in Kontakt mit der äußeren Versiegelung 16. Der polymere Grundkörper 1 und der Steg 20 enthalten Styrol-Acryl-Nitryl (SAN) mit etwa 35 Gew.-% Glasfaser. Die Verglasungsinnenraumflächen 3.1 und 3.2 weisen in regelmäßigen Abständen Öffnungen 8 auf, die die Hohlkammern 5.1 und 5.2 mit dem oberhalb der Verglasungsinnenraumflächen 3.1 und 3.2 liegenden Luftraum verbinden. Der Abstandshalter I hat eine Höhe von 6,5 mm und eine Gesamtbreite von 34 mm. Die Nut 6 besitzt eine Tiefe von 3 mm, während die erste Verglasungsinnenraumfläche 3.1 16 mm und die zweite Verglasungsinnenraumfläche 3.2 16 mm breit ist. Die Gesamtbreite des Abstandshalters I ergibt sich dabei als Summe der Breiten der Verglasungsinnenraumflächen 3.1 und 3.2 und der Dicke der in die Nut 6 einzusetzenden dritten Scheibe 15 mit Einlage 9.

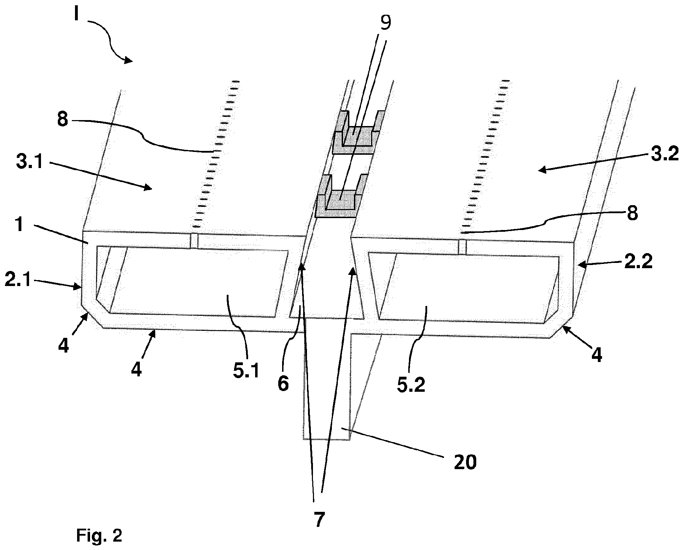

Figur 2 zeigt einen Querschnitt des erfindungsgemäßen Abstandshalters I. Der gezeigte Abstandshalter entspricht in den Grundzügen dem in Figur 1 dargestellten. In der Nut 6 ist eine Einlage 9 aus Butyl angebracht. Die Einlage 9 liegt an den Seitenflanken 7 an. Die Einlage 9 fixiert die einzusetzende Scheibe in der Nut 6 und verhindert eine Geräuschentwicklung beim Öffnen und Schließen des Fensters und kompensiert eine thermische Ausdehnung der einzusetzenden Scheibe bei Erwärmen. Die Einlage 9 weist Unterbrechungen auf, wodurch nach Einbau einer einzusetzenden dritten Scheibe 15 der Druckausgleich zwischen angrenzenden inneren Scheibenzwischenräumen 17.1 und 17.2 ermöglicht wird. Die Breite a des Stegs 20 ist bei dem dargestellten Abstandshalter etwas kleiner als in Figur 1 und beträgt nur 2 mm, wodurch eine ausreichende Abstützung erreicht wird bei gleichzeitiger Materialeinsparung.

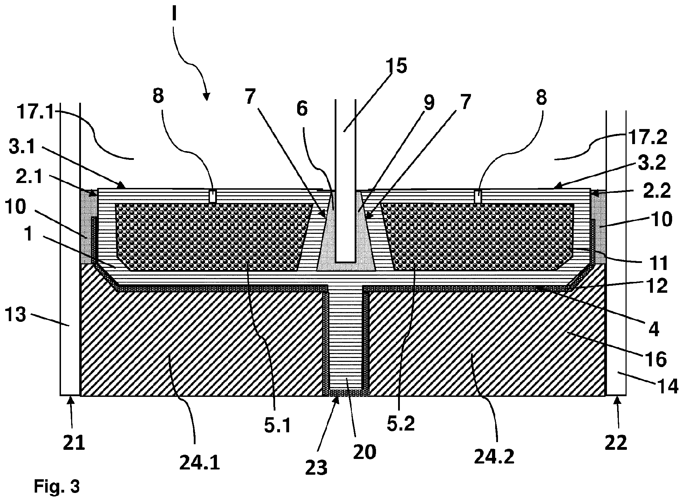

Figur 3 zeigt einen Querschnitt einer erfindungsgemäßen Isolierverglasung mit dem in Figur 2 dargestellten Abstandshalter I. Die erste Scheibe 13 der Dreifachisolierverglasung ist dabei über eine Dichtung 10 mit der ersten Scheibenkontaktfläche 2.1 des Abstandshalters I verbunden, während die zweite Scheibe 14 über eine Dichtung 10 mit der zweiten Scheibenkontaktfläche 2.2 verbunden ist. Die Dichtung 10 besteht aus einem vernetzenden Polyisobutylen. Die Seitenflanken 7 der Nut 6 sind nach innen in Richtung der dritten Scheibe 15 geneigt. In die Nut 6 des Abstandshalters ist eine dritte Scheibe 15 über eine Einlage 9 eingesetzt. Die Einlage 9 umschließt die Kante der dritten Scheibe 15 und passt sich bündig in die Nut 6 ein. Die Einlage 9 besteht aus Butylkautschuk. Die Einlage 9 fixiert die dritte Scheibe 15 spannungsfrei und kompensiert eine Wärmeausdehnung der Scheibe. Des Weiteren verhindert die Einlage 9 eine Geräuschentwicklung durch Verrutschen der dritten Scheibe 15. Der Zwischenraum zwischen erster Scheibe 13 und dritter Scheibe 15 begrenzt durch die erste Verglasungsinnenraumfläche 3.1 ist dabei als der erste innere Scheibenzwischenraum 17.1 definiert und der Raum zwischen dritter Scheibe 15 und zweiter Scheibe 14 begrenzt durch die zweite Verglasungsinnenraumfläche 3.2 als der zweite innere Scheibenzwischenraum 17.2 definiert. Über die Öffnungen 8 in den Verglasungsinnenraumflächen 3.1 und 3.2 sind die inneren Scheibenzwischenräume 17.1 und 17.2 mit der jeweils darunter liegenden Hohlkammer 5.1 bzw. 5.2 verbunden. In den Hohlkammern 5.1 und 5.2 befindet sich ein Trockenmittel 11, das aus Molekularsieb besteht. Durch die Öffnungen 8 findet ein Gasaustausch zwischen den Hohlkammern 5.1, 5.2 und den Scheibenzwischenräumen 17.1 und 17.2 statt, wobei das Trockenmittel 11 die Luftfeuchtigkeit aus den Scheibenzwischenräumen 17.1 und 17.2 entzieht. Der polymere Grundkörper 1 und der Steg 20 sind einstückig ausgeführt. So entsteht eine besonders stabile Verbindung zwischen Steg 20 und polymerem Grundkörper 1. Zudem wird im Vergleich zu einer zweistückigen Ausführung ein Produktionsschritt, nämlich das Aufkleben des Stegs 20, eingespart. Auf der Außenfläche 4, die bei dieser einstückigen Ausführung von Grundkörper 1 und Steg 20 auch die Seitenflächen 25 und die Kante 23 des Stegs 20 umfasst, ist eine Barriere 12 aufgebracht, die den Wärmeübergang durch den polymeren Grundkörper 1 in die Scheibenzwischenräume 17 vermindert. Die Barriere 12 ist als Barrierefolie 12 ausgeführt und kann beispielsweise mit einem Polyurethan-Schmelzklebstoff auf dem polymeren Grundkörper 1 befestigt werden. Die Barrierefolie 12 umfasst vier polymere Schichten aus Polyethylenterephthalat mit einer Dicke von 12 µm und drei metallische Schichten aus Aluminium mit einer Dicke von 50 nm. Die metallischen Schichten und die polymeren Schichten sind dabei jeweils alternierend angebracht, wobei die beiden äußeren Lagen von polymeren Schichten gebildet werden. Die erste Scheibe 13 und die zweite Scheibe 14 ragen über die Scheibenkontaktflächen 2.1 und 2.2 hinaus, so dass ein äußerer Scheibenzwischenraum 24 entsteht, der durch den Steg 20 in einen ersten äußeren Scheibenzwischenraum 24.1 und einen zweiten äußeren Scheibenzwischenraum 24.2 unterteilt wird. Die Kante 21 der ersten Scheibe 13, die Kante 22 der zweiten Scheibe 14 und die Kante 23 des Stegs 20 sind auf einer Höhe angeordnet. Die äußeren Scheibenzwischenräume 24.1 und 24.2 sind mit einer äußeren Versiegelung 16 verfüllt. Diese äußere Versiegelung 16 wird von einem organischen Polysulfid gebildet. Der Steg 20 teilt die äußere Versiegelung 16 in zwei Teile. Da die thermische Leitfähigkeit der äußeren Versiegelung 16 höher ist als die des Stegs 20, findet eine thermische Entkoppelung statt, die zu einer Verbesserung der thermischen Isolationseigenschaften des Randverbunds führt. Die erste Scheibe 13 und die zweite Scheibe 14 bestehen aus Kalk-Natron-Glas mit einer Dicke von 3 mm, während die dritte Scheibe 15 von Kalk-Natron-Glas mit einer Dicke von 2 mm gebildet wird.

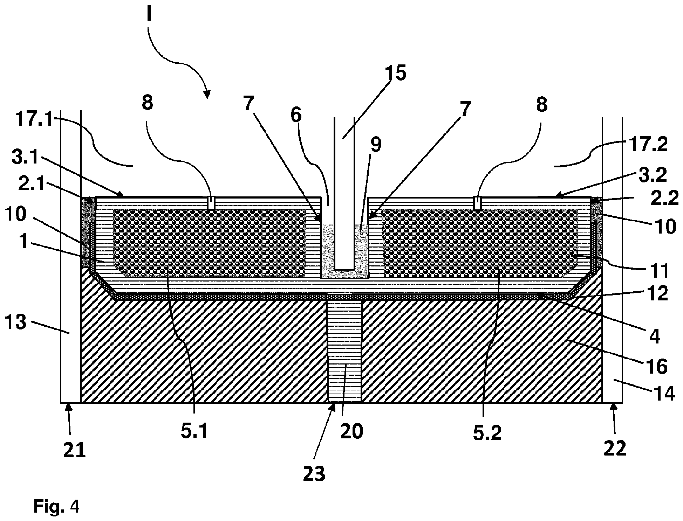

Figur 4 zeigt einen Querschnitt einer erfindungsgemäßen Isolierverglasung mit einem erfindungsgemäßen Abstandshalter I. In den Grundzügen entspricht die Isolierverglasung der in Figur 3 gezeigten Isolierverglasung. Die Seitenflanken 7 der Nut 6 verlaufen in diesem Fall parallel zu den Scheibenkontaktflächen 2.1 und 2.2. Die Einlage 9 erstreckt sich über die gesamte Breite der Bodenfläche aber bedeckt die Seitenflanken 7 der Nut 6 nur zu einem Teil, wodurch Material gespart wird. Der polymere Grundkörper 1 und der Steg 20 sind zweistückig ausgeführt. Unterhalb der Nut 6 ist der Steg 20 auf der Barrierefolie 12 angebracht. Der Steg 20 besteht aus Styrol-Acryl-Nitryl (SAN) mit etwa 35 % Glasfaser. Der Steg 20 ist zum Beispiel mit einem Polyurethan-Schmelzklebstoff befestigt. In dieser zweistückigen Ausführung von polymerem Grundkörper 1 und Steg 20 muss der Steg 20 nicht zusätzlich mit der Barrierefolie 12 versehen werden, um eine effektive Isolierwirkung zu erreichen, wodurch die Materialkosten reduziert werden.

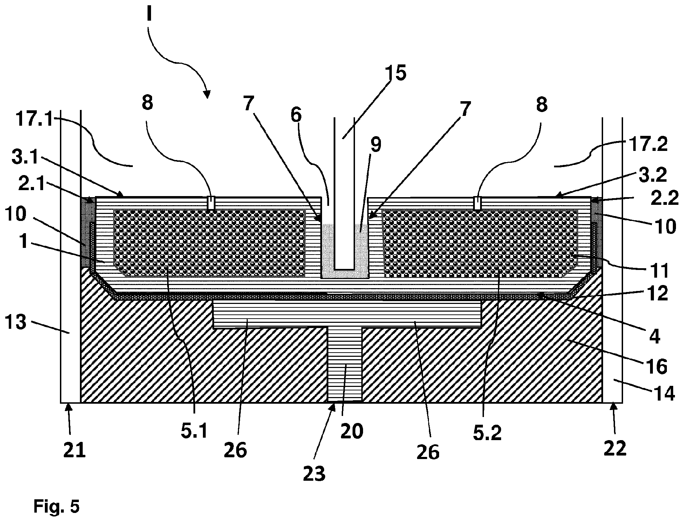

Figur 5 zeigt einen Querschnitt einer erfindungsgemäßen Isolierverglasung mit einem erfindungsgemäßen Abstandshalter I. In den Grundzügen entspricht die Isolierverglasung der in Figur 4 gezeigten Isolierverglasung. Der Steg 20 und der polymere Grundkörper 1 sind zweistückig ausgeführt. Der Steg 20 ist als T-förmiges Profil ausgeführt. Die zwei Seitenarme 26 des Stegs 20 erhöhen die Stabilität des Abstandshalters I, da die Verklebungsfläche mit der gas- und dampfdichten Barriere 12 vergrößert wird. Die Dicke der Seitenarme beträgt etwa 1 mm. Die Seitenarme bedecken nur einen Teil der Außenfläche.

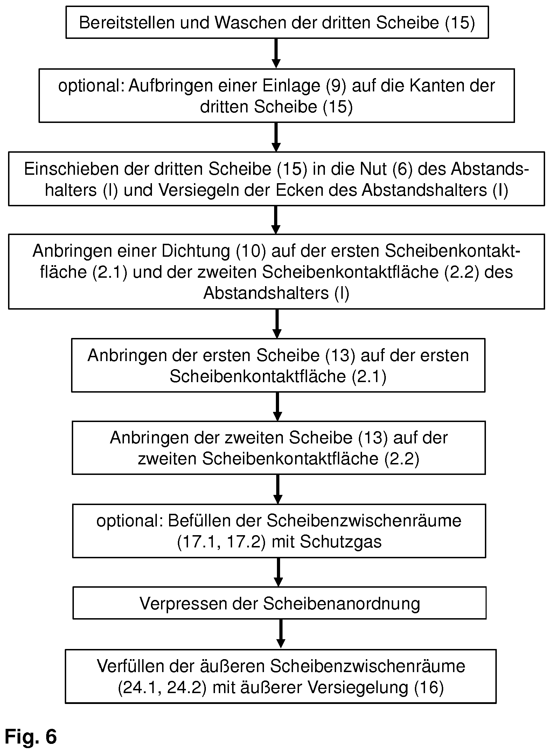

Figur 6 zeigt ein Flussdiagramm einer möglichen Ausführungsform des erfindungsgemäßen Verfahrens. Zunächst wird die dritte Scheibe 15 bereitgestellt und gewaschen. Optional wird danach eine Einlage 9 auf die Kanten der dritten Scheibe 15 aufgebracht. Die dritte Scheibe 15 wird nun in die Nut 6 des erfindungsgemäßen Abstandshalters I eingeschoben. Dabei können beispielsweise drei Abstandshalter I zu einem an einer Seite offenen Rechteck vorgeformt werden, wobei die dritte Scheibe 15 über die offene Seite in die Nut 6 eingeschoben wird. Anschließend wird die vierte Scheibenkante mit einem Abstandshalter I geschlossen. Die Ecken der Abstandshalter werden entweder verschweißt oder über Eckverbinder miteinander verknüpft. Diese ersten drei Verfahrensschritte dienen der Vorbereitung einer dritten Scheibe 15 mit erfindungsgemäßem Abstandshalter I. Ein derartig vormontiertes Bauteil kann daraufhin in einer klassischen Doppelverglasungsanlage weiterverarbeitet werden. In der Doppelverglasungsanlage erfolgt die Montage der ersten Scheibe 13 und der zweiten Scheibe 14 an den Scheibenkontaktflächen 2.1 und 2.2 über jeweils eine Dichtung 10. Optional kann ein Schutzgas in die Scheibenzwischenräume 17.1 und 17.2 eingebracht werden. Anschließend wird die Isolierverglasung verpresst. Im letzten Schritt wird eine äußere Versiegelung 16 in die äußeren Scheibenzwischenräume 24.1 und 24.2 eingefüllt und die fertige Isolierverglasung zum Trocknen auf einem Rahmengestell gelagert.

### Bezugszeichenliste

- I: Abstandshalter
- 1: polymerer Grundkörper
- 2: Scheibenkontaktflächen
- 2.1: erste Scheibenkontaktfläche
- 2.2: zweite Scheibenkontaktfläche
- 3: Verglasungsinnenraumflächen
- 3.1: erste Verglasungsinnenraumfläche
- 3.2: zweite Verglasungsinnenraumfläche
- 4: Außenfläche
- 5: Hohlkammern
- 5.1: erste Hohlkammer
- 5.2: zweite Hohlkammer
- 6: Nut
- 7: Seitenflanken
- 8: Öffnungen
- 9: Einlage
- 10: Dichtung
- 11: Trockenmittel
- 12: Barriere /Barrierefolie /Barrierebeschichtung
- 13: erste Scheibe
- 14: zweite Scheibe
- 15: dritte Scheibe
- 16: äußere Versiegelung
- 17: innere Scheibenzwischenräume
- 17.1: erster innerer Scheibenzwischenraum
- 17.2: zweiter innerer Scheibenzwischenraum
- 20: Steg
- 21: Kante der ersten Scheibe
- 22: Kante der zweiten Scheibe
- 23: Kante des Stegs
- 24: äußerer Scheibenzwischenraum
- 24.1: erster äußerer Scheibenzwischenraum
- 24.2: zweiter äußerer Scheibenzwischenraum
- 25: Seitenfläche des Stegs
- 26: Seitenarm des Stegs
- a: Breite des Stegs
- b: Höhe des Stegs

## Patentansprüche

1. Abstandshalter (I) für Isolierverglasungen mindestens umfassend einen polymeren Grundkörper (1) umfassend eine erste Scheibenkontaktfläche (2.1) und eine parallel dazu verlaufende zweite Scheibenkontaktfläche (2.2), eine erste Verglasungsinnenraumfläche (3.1), eine zweite Verglasungsinnenraumfläche (3.2), eine Außenfläche (4), eine erste Hohlkammer (5.1) und eine zweite Hohlkammer (5.2),
wobei
- eine Nut (6) zur Aufnahme einer Scheibe parallel zur ersten Scheibenkontaktfläche (2.1) und zweiten Scheibenkontaktfläche (2.2) zwischen der ersten Verglasungsinnenraumfläche (3.1) und der zweiten Verglasungsinnenraumfläche (3.2) verläuft,
- die erste Hohlkammer (5.1) an die erste Verglasungsinnenraumfläche (3.1) angrenzt und die zweite Hohlkammer (5.2) an die zweite Verglasungsinnenraumfläche (3.2) angrenzt,
- die Seitenflanken (7) der Nut (6) von den Wänden der ersten Hohlkammer (5.1) und der zweiten Hohlkammer (5.2) gebildet sind, **dadurch gekennzeichnet, dass**
- ein Steg (20) auf der der Nut (6) gegenüberliegenden Seite des Abstandshalters (I) direkt unterhalb der Nut (6) angeordnet ist.

2. Abstandshalter (I) für Isolierverglasung nach Anspruch 1, wobei eine gas- und dampfdichte Barriere (12) auf der Außenfläche (4) des polymeren Grundkörpers (1) und mindestens einem Teil der Scheibenkontaktflächen (2.1, 2.2) angebracht ist, und der Steg (20) auf der Barriere (12) angebracht ist.

3. Abstandshalter (I) für Isolierverglasung nach Anspruch 1, wobei der polymere Grundkörper (1) und der Steg (20) in einem Stück extrudiert oder co-extrudiert sind und eine gas- und dampfdichte Barriere (12) auf der Außen-fläche (4) des polymeren Grundkörpers (1), den Seitenflächen des Stegs (25), der Kante des Stegs (23) und mindestens einem Teil der Scheibenkontakt-flächen (2.1, 2.2) angebracht ist.

4. Abstandshalter (I) für Isolierverglasungen nach Anspruch 2 oder 3, wobei die gas- und dampfdichte Barriere (12) als Folie ausgeführt ist, die mindestens eine polymere Schicht sowie eine metallische Schicht oder eine keramische Schicht, bevorzugt mindestens zwei metallische Schichten und/oder keramische Schichten, die alternierend mit mindestens einer polymeren Schicht angeordnet sind, umfasst.

5. Abstandshalter (I) für Isolierverglasungen nach Anspruch 3, wobei die gas- und dampfdichte Barriere (12) als Beschichtung ausgeführt ist, die Aluminium, Aluminiumoxide und / oder Siliciumoxide enthält und bevorzugt über ein PVD-Verfahren (physikalische Gasphasenabscheidung) aufgebracht ist.

6. Abstandshalter (I) für Isolierverglasungen nach einem der Ansprüche 1 bis 5, wobei in der Nut (6) eine Einlage (9), bevorzugt eine Einlage (9) enthaltend ein Elastomer, besonders bevorzugt enthaltend Butylkautschuk, angebracht ist.

7. Abstandshalter (I) für Isolierverglasungen nach einem der Ansprüche 1 bis 6, wobei die Wandstärke d' im Bereich der Seitenflanken (7) geringer ist als die Wandstärke d des polymeren Grundkörpers (1), bevorzugt d' < 0,7 d, besonders bevorzugt d' < 0,5 d, gilt.

8. Abstandshalter (I) für Isolierverglasungen nach einem der Ansprüche 1 bis 7, wobei der polymere Grundkörper (1) ein Trockenmittel (11), bevorzugt Kieselgele, Molekularsiebe, CaCl₂, Na₂SO₄, Aktivkohle, Silikate, Bentonite, Zeolithe und/oder Gemische davon enthält.

9. Abstandshalter (I) für Isolierverglasungen nach einem der Ansprüche 1 bis 8, wobei der polymere Grundkörper (1) Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon enthält.

10. Isolierverglasung mindestens umfassend eine erste Scheibe (13), eine zweite Scheibe (14) und eine dritte Scheibe (15) und einen umlaufenden Abstandshalter (I) nach einem der Ansprüche 1 bis 9,
wobei
- die erste Scheibe (13) an der ersten Scheibenkontaktfläche (2.1) anliegt,
- die zweite Scheibe (14) an der zweiten Scheibenkontaktfläche (2.2) anliegt,
- die dritte Scheibe (15) in die Nut (6) des Abstandshalters (I) eingesetzt ist,
- die Kante der ersten Scheibe (21), die Kante der zweiten Scheibe (22) und die Kante des Stegs (23) bündig angeordnet sind und so der Raum zwischen erster Scheibe (13) und zweiter Scheibe (14) durch den Steg (20) in einen ersten äußeren Scheibenzwischenraum (24.1) und einen zweiten äußeren Scheibenzwischenraum (24.2) geteilt wird und
- die äußeren Scheibenzwischenräume (24.1, 24.2) mit einer äußeren Versiegelung (16) verfüllt sind.

11. Isolierverglasung nach Anspruch 10, wobei zwischen der ersten Scheibe (13) und der ersten Scheibenkontaktfläche (2.1) und/oder der zweiten Scheibe (14) und der zweiten Scheibenkontaktfläche (2.2) eine Dichtung (10) angebracht ist und die Dichtung (10) bevorzugt ein Polyisobutylen enthält.

12. Verfahren zur Herstellung einer Isolierverglasung nach Anspruch 10 oder 11, wobei zumindest
a) die dritte Scheibe (15) in die Nut (6) des Abstandshalters (I) eingesetzt wird,
b) die erste Scheibe (13) auf der ersten Scheibenkontaktfläche (2.1) des Abstandshalters (I) angebracht wird,
c) die zweite Scheibe (14) auf der zweiten Scheibenkontaktfläche (2.2) des Abstandshalters (I) angebracht wird und
d) die Scheibenanordnung aus den Scheiben (13, 14, 15) und dem Abstandshalter (I) miteinander verpresst wird.

13. Verfahren nach Anspruch 12, wobei zunächst der Abstandshalter (I) zu einem einseitig offenen Rechteck vorgeformt wird, die dritte Scheibe (15) in die Nut (6) des Abstandshalters (I) eingeschoben wird und die verbleibende Scheibenkante mit einem Abstandshalter (I) geschlossen wird.

14. Verwendung eines Abstandshalters (I) nach einem der Ansprüche 1 bis 9 in Mehrfachverglasungen, bevorzugt in Isolierverglasungen, besonders bevorzugt in Dreifachisolierverglasungen.

## Claims

1. Spacer (I) for insulating glazing units at least comprising a polymeric main body (1) comprising a first pane contact surface (2.1) and a second pane contact surface (2.2) running parallel thereto, a first glazing interior surface (3.1), a second glazing interior surface (3.2), an outer surface (4), a first hollow chamber (5.1), and a second hollow chamber (5.2),
wherein
- a groove (6) to accommodate a pane runs parallel to the first pane contact surface (2.1) and second pane contact surface (2.2) between the first glazing interior surface (3.1) and the second glazing interior surface (3.2),
- the first hollow chamber (5.1) is adjacent the first glazing interior surface (3.1) and the second hollow chamber (5.2) is adjacent the second glazing interior surface (3.2),
- the lateral flanks (7) of the groove (6) are formed by the walls of the first hollow chamber (5.1) and the second hollow chamber (5.2),
**characterized in that**
- a web (20) is arranged directly below the groove (6) on the side of the spacer (I) opposite the groove (6).

2. Spacer (I) for an insulating glazing unit according to claim 1, wherein a gas- and vapor-tight barrier (12) is mounted on the outer surface (4) of the polymeric main body (1) and on at least a part of the pane contact surfaces (2.1, 2.2), and the web (20) is mounted on the barrier (12).

3. Spacer (I) for an insulating glazing unit according to claim 1, wherein the polymeric main body (1) and the web (20) are extruded or coextruded in one piece and a gas- and vapor-tight barrier (12) is mounted on the outer surface (4) of the polymeric main body (1), on the lateral surfaces of the web (25), on the edge of the web (23), and on at least a part of the pane contact surfaces (2.1, 2.2).

4. Spacer (I) for insulating glazing units according to claim 2 or 3, wherein the gas- and vapor-tight barrier (12) is implemented as a film that comprises at least one polymeric layer as well as one metallic layer or one ceramic layer, preferably at least two metallic layers and/or ceramic layers, that are arranged alternatingly with at least one polymeric layer.

5. Spacer (I) for insulating glazing units according to claim 3, wherein the gas- and vapor-tight barrier (12) is implemented as a coating that contains aluminum, aluminum oxides, and / or silicon oxides and is preferably applied by a PVD method (physical vapor deposition).

6. Spacer (I) for insulating glazing units according to one of claims 1 through 5, wherein an insert (9), preferably an insert (9) containing an elastomer, particularly preferably containing butyl rubber, is mounted in the groove (6).

7. Spacer (I) for insulating glazing units according to one of claims 1 through 6, wherein the wall thickness d' in the region of the lateral flanks (7) is less than the wall thickness d of the polymeric main body (1), preferably d' < 0.7 d, particularly preferably d' < 0.5 d.

8. Spacer (I) for insulating glazing units according to one of claims 1 through 7, wherein the polymeric main body (1) contains a desiccant (11), preferably silica gels, molecular sieves, CaCl₂, Na₂SO₄, activated carbon, silicates, bentonites, zeolites, and/or mixtures thereof.

9. Spacer (I) for insulating glazing units according to one of claims 1 through 8, wherein the polymeric main body (1) contains polyethylene (PE), polycarbonates (PC), polypropylene (PP), polystyrene, polybutadiene, polynitriles, polyesters, polyurethanes, polymethylmethacrylates, polyacrylates, polyamides, polyethylene terephthalate (PET), polybutylene terephthalate (PBT), preferably acrylonitrile butadiene styrene (ABS), acrylonitrile styrene acrylester (ASA), acrylonitrile butadiene styrene/polycarbonate (ABS/PC), styrene acrylonitrile (SAN), PET/PC, PBT/PC, and/or copolymers or mixtures thereof.

10. Insulating glazing unit, at least comprising a first pane (13), a second pane (14) and a third pane (15) and a circumferential spacer (I) according to one of claims 1 through 9, wherein
- the first pane (13) contacts the first pane contact surface (2.1),
- the second pane (14) contacts the second pane contact surface (2.2),
- the third pane (15) is inserted into the groove (6) of the spacer (I),
- the edge of the first pane (21), the edge of the second pane (22), and the edge of the web (23) are arranged flush and thus the space between a first pane (13) and the second pane (14) is divided by the web (20) into a first outer interpane space (24.1) and a second outer interpane space (24.2), and
- the outer interpane spaces (24.1, 24.2) are filled with an outer seal (16).

11. Insulating glazing unit according to claim 10, wherein a seal (10) is mounted between the first pane (13) and the first pane contact surface (2.1), and/or the second pane (14) and the second pane contact surface (2.2), and the seal (10) preferably contains a polyisobutylene.

12. Method for producing an insulating glazing unit according to claim 10 or 11,
wherein at least
a) the third pane (15) is inserted into the groove (6) of the spacer (I),
b) the first pane (13) is mounted on the first pane contact surface (2.1) of the spacer (I),
c) the second pane (14) is mounted on the second pane contact surface (2.2) of the spacer (I), and
d) the pane arrangement comprising the panes (13, 14, 15) and the spacer (I) is pressed together.

13. Method according to claim 12, wherein, first, the spacer (I) is preshaped to form a rectangle open on one side, the third pane (15) is slid into the groove (6) of the spacer (I), and the remaining pane edge is closed with a spacer (I).

14. Use of a spacer (I) according to one of claims 1 through 9 in multiple glazing units, preferably in insulating glazing units, particularly preferably in triple insulating glazing units.

## Revendications

1. Écarteur en plastique (I) pour vitrage isolant comprenant au moins un corps de base polymère (1) comprenant au moins une première surface de contact de vitrage (2.1) et, s'étendant parallèle à celle-ci, une deuxième surface de contact de vitrage (2.2), un première surface intérieure de vitrage (3.1), une deuxième surface intérieure de vitrage (3.2), une surface extérieure (4), une première chambre creuse (5.1) et une deuxième chambre creuse (5.2),
où
- une rainure (6) pour accueillir une vitre s'étend parallèle à la première surface de contact de vitrage (2.1) et la deuxième surface de contact de vitrage (2.2) entre la première surface intérieure de vitrage (3.1) et la deuxième surface intérieure de vitrage (3.2),
- la première chambre creuse (5.1) est contigüe à la première surface intérieure de vitrage (3.1) et la deuxième chambre creuse (5.2) est contigüe à la deuxième surface intérieure de vitrage (3.2),
- les flancs latéraux (7) de la rainure (6) sont formés par les parois de la première chambre creuse (5.1) et la deuxième chambre creuse (5.2),
**caractérisé en ce**
- **qu'**une barrette (20) est disposée sur le côté de l'écarteur (I) en face de la rainure (6) directement sous la rainure (6).

2. Écarteur (I) pour vitrage isolant selon la revendication 1, où une barrière (12) au gaz et à la vapeur est montée sur la surface externe (4) du corps polymère (1) et au moins une partie des surfaces de contact de vitrage (2.1, 2.2) et la barrette (20) est montée sur la barrière (12).

3. Écarteur (I) pour vitrage isolant selon la revendication 1, où le corps de base polymère (1) et la barrette (20) sont extrudés ou coextrudés en un seul morceau et une barrière au gaz et à la vapeur (12) est montée sur la surface externe (4) du corps polymère (1), des côtés de la barrette (25), du bord de la barrette (23) et au moins une partie des surfaces de contact de vitrage (2.1, 2.2).

4. Écarteur (I) pour vitrage isolant selon la revendication 2 ou 3, où la barrière au gaz et à la vapeur (12) est réalisée comme film qui comprend au moins une couche polymère et une couche métallique ou une couche céramique, de préférence au moins deux couches métalliques et/ou céramiques, qui sont disposées en alternance avec au moins une couche polymère.

5. Écarteur (I) pour vitrage isolant selon la revendication 3, où la barrière de gaz et de vapeur (12) est réalisée comme revêtement qui contient de l'aluminium, des oxydes d'aluminium et/ou des oxydes de silicium et de préférence est attachée par un procédé PVD (dépôt physique en phase vapeur).

6. Écarteur (I) pour vitrage isolant selon l'une des revendications 1 à 5, où dans la rainure (6) un dépôt (9) est montée, de préférence un dépôt (9) contenant un élastomère, de manière particulièrement préférée contenant du caoutchouc butyle.

7. Écarteur (I) pour vitrage isolant selon l'une des revendications 1 à 6, où l'épaisseur d' des parois dans la zone des flancs latéraux (7) est inférieure à l'épaisseur d des parois du corps de base polymère (1), de préférence d' <0,7 d, de manière particulièrement privilégié d' < 0,5 d.

8. Écarteur (I) pour vitrage isolant selon l'une des revendications 1 à 7, où le corps de base polymère (1) contient un déshydratant (11), de préférence des gels de silice, des tamis moléculaires, du CaCl₂, du Na₂SO₄, du charbon actif, des silicates, des bentonites, des zéolites et/ou des mélanges de ceux-ci.

9. Écarteur (I) pour vitrage isolant selon l'une des revendications 1 à 8, où le corps de base polymère (1) contient du polyéthylène (PE), du polycarbonate (PC), du polypropylène (PP), du polystyrène, du polybutadiène, du polynitrile, du polyester, du polyuréthane, des polyméthacrylates, des polyacrylates, des polyamides, du polyéthylène téréphtalate (PET), du téréphtalate de polybutylène (PBT), de préférence de l'acrylonitrile-butadiène-styrène (ABS), de l'acrylonitrile styrène acrylate (ASA), de l'acrylonitrile butadiène styrène/polycarbonate (ABS/PC), du styrène acrylonitrile (SAN), du PET/PC, du PBT/PC et/ou des copolymères ou des mélanges de ceux-ci.

10. Vitrage isolant comprenant au moins une première vitre (13), une deuxième vitre (14) et une troisième vitre (15) et un écarteur circonférentielle (I) selon l'une des revendications 1 à 9, où
- la première vitre (13) est posée contre la première surface de contact de vitrage (2.1),
- la deuxième vitre (14) est posée contre la deuxième zone de contact de disque (2.2),
- la troisième vitre (15) est insérée dans la rainure (6) de l'écarteur (I),
- le bord de la première vitre (21), le bord de la deuxième vitre (22) et le bord de la barrette (23) sont disposés en affleurement et ainsi l'espace entre la première vitre (13) et la deuxième vitre (14) se divise à travers la barrette (20) en un premier espace extérieur entre vitres (24,1) et un deuxième espace extérieur entre vitres (24,2) et
- les espaces extérieurs entre vitres (24.1, 24.2) sont remplis d'un joint d'étanchéité (16) externe.

11. Vitrage isolant selon la revendication 10, où entre la première vitre (13) et la première surface de contact de vitrage (2.1) et/ou la deuxième vitre (14) et la deuxième surface de contact de vitrage (2.2) un joint d'étanchéité (10) est attaché et de préférence le joint d'étanchéité (10) contient un polyisobutylène.

12. Procédé de fabrication d'un vitrage isolant selon l'une des revendications 10 ou 11, où au moins
a) la troisième vitre (15) est insérée dans la rainure (6) de l'écarteur (I),
b) la première vitre (13) est posée sur la première surface de contact de vitrage (2.1) de l'écarteur (I)
c) la deuxième vitre (14) est posée sur la deuxième surface de contact de vitrage (2.2) de l'écarteur (I) et
d) la configuration de vitres composée des vitres (13, 14, 15) et l'écarteur (I) est pressée ensemble.

13. Procédé selon la revendication 12, où initialement l'écarteur (I) est préformé en un simple rectangle ouvert, la troisième vitre (15) est inséré dans la rainure (6) de l'écarteur (I) et le bord restant de la vitre est fermé avec un écarteur (I).

14. Utilisation d'un écarteur (I) selon l'une des revendications 1 à 9 dans les vitrages multiples, de préférence dans les vitrage isolants, de manière particulièrement privilégiées dans les triple vitrages isolants.
